# EUROPEAN PATENT SPECIFICATION

(11) **EP 0 679 814 B1**
(45) Date of publication and mention of the grant of the patent: **09.08.2000**
(21) Application number: 95302656.4
(22) Date of filing: 21.04.1995
(51) Int. Cl.: F16B 13/12

(54) **Wall plugs having fluted legs**
Gerillte Spreizdübel
Chevilles à expansion profilés

(30) Priority: 29.04.1994 GB 9408589
(43) Date of publication of application: 02.11.1995
(73) Proprietor: Black & Decker Inc., Newark Delaware 19711 (US)
(72) Inventor: Anquetin, Robert Paul, F-Etrechy (Esonne) (FR)
(74) Representative: Dlugosz, Anthony Charles

(56) References cited:
- DE-A- 1 813 812
- DE-A- 3 218 897
- FR-A- 1 305 102
- FR-A- 2 109 244
- FR-A- 2 331 706
- US-A- 4 596 503

## Description

This invention relates to wall plugs according to the preamble of claim 1.

In use, a hole is drilled in a masonry type product (i.e. a product which does not directly take a screw with any degree of security) and in the hole so-formed the plug is inserted with the legs portion first. Usually the end of the head portion is arranged to lie flush with the surface of the product, although this is not critical.

A screw or other screw threaded fastener is then inserted in the bore of the head portion and turned until the threads begin to bite in the material of the plug. The bore might also be tapered inwardly to assist pick-up of the screw. It is only once the screw begins to bite that the cross-section of the screw and parts of the plug, in combination, begin to exceed the dimensions of the hole and so the plug starts to deform and grip the bore of the hole in the product, and the threads of the screw cut a strong thread in the plug.

In the leg portion of the plug the diameter of the bore tends to reduce and even disappear so that as the screw progresses it gets tighter and tighter in the bore in the product.

Ultimately the screw has progressed as far as required and it has a level of security in the product in question. It is an object of the present invention to improve that level of security, which it is known can be improved and is influenced by a number of different factors. One such factor is the material of the product; another is the size of the hole, the plug and the screw; another is the material of the plug; and another is the design of the plug. By "security" is meant the difficulty with which the screw is simply pulled out of the product in which it, and the plug, is fixed. Needless to say, the greater that difficulty the more secure is the fixing.

We have developed several features of the design of a plug, of which the present invention is one, which together result in a plug which is comparable in performance with existing plugs constructed from polyamide materials such as Nylon when it is itself constructed from polypropylene, a material acknowledged to be significantly less expensive then polyamide materials but usually significantly less effective. Put another way, it is an object of the present invention to provide a plug which has improved security over similar known plugs in corresponding circumstances.

It is known to provide flutes in the leg portions of wall plugs as such flutes serve the purpose of improving the grip of the plug inside the bore of the product once a screw or other fastener has been inserted.

Such flutes are generally in the form of circumferential ridges or teeth around the legs portion of the plug. Such ridges may be formed by V-shaped notches to form conical surfaces on the plug.

A plug of the above-mentioned type incorporating circumferentially inclined flute arrangements is disclosed in German Patent No. DE 32 18 897 which is considered to comprise the closest prior art to the present invention. The plug described therein comprises notches with sider which are generally parallel to the axis of the plug.

Nevertheless, it is a particular object of the present invention to provide a wall plug of the type described which has an improved flute design.

In accordance with the present invention there is provided a wall plug comprising:-
a body portion constructed as a substantially cylindrical body having an axial through bore;
a legs portion connected to the body portion and comprising two legs defined by a slit substantially disposed about a first plane; and
flutes formed around the leg portions which are inclined backwards towards the body portion;
wherein each flute commences at or near the slit on one side of the plug and extends backwardly around the plug until reaching a second plane perpendicular to the first plane; and then extends forwardly until reaching near the slit on the other side of the plug;
characterised in that
each flute on each leg comprises a V-shaped notch, one side of the notch lying in a third plane around the entire length of the notch, which third plane is inclined with respect to the axis of the plug and contains a line which is both perpendicular to the axis and contained in the first plane, the one side of the notch being further from the body than the other side.
Said other side of said notch is preferably part conical, intersecting said one side on a eliptical line in said third plane and centered on the axis of the plug.

The purpose of said inclined flutes is two-fold. Firstly, because they provide an axial dimension to the known flutes, they serve an additional useful function as anti-rotation devices. That is to say, because the flutes are inclined, then rotation of the plug in the bore of the product cuts further material out of the bore and this provides a reaction force against rotation.

Secondly, the flutes are undercut by virtue of their inclination, at least in said second plane, and so provide a sharper edge in this region (where, indeed, there is maximum force applied against the bore of the product by the legs as they attempt to splay as the fastener is inserted). This sharper edge means that the plug more easily cuts and grips the material of the product in which the plug is inserted and so a better grip, and a more secure fixing is achieved.

Despite being undercut, nevertheless the inclination of the flutes enables the plug to be constructed in a standard mould employed for these types of plug. That is to say, they are moulded by a two-part mould, separating in said second plane, with a core pin for the bore of the plug.

We have filed three co-pending applications simultaneously herewith under the titles "Wall plugs having arms," "Wall plugs having ridged arms" and "Wall plugs having anti-rotation arms." These each describe further features of arms formed in the body portions of the wall plugs by U-shaped openings in the body portion and which arms further enhance the effectiveness of the plugs and which, together with the present invention, result in a wall plug of particular effectiveness. We have also filed simultaneously herewith an application under the title "Wall plugs with wings." This adds a further dimension to the wall plug, enabling its use in hollow construction product. All of these features are capable of being incorporated in the same wall plug, resulting in a particularly secure wall plug which, even when constructed from polypropylene, has comparable security to presently available polyamide plugs in corresponding circumstances. Certainly such a plug is an improvement over known plugs not having these features.

Preferably, two arms are formed in said body portion by U-shaped openings in said body portion, one on either side of said body portion, and said arms lie in said first plane.

Preferably said arms have a dimension extending into the bore of said plug which is greater along the sides of the arm than along a central axis of the arm. This ensures that a screw in the bore of the plug does not deflect the arms sideways while at the same time ensuring that the screw also remains central.

Thus the present invention provides a plug in which the legs of the leg portion are prised apart by the screw and grip the bore of the product in one direction or plane, while the arms in the body portion are prised apart by the screw and grip the bore of the product in a perpendicular direction or plane. This serves to distribute the loads in the plug more evenly so that the product is capable of accepting greater loads. Consequently the plug can be designed to impose greater loads, and hence provide greater security, than would otherwise be possible.

Furthermore, by providing the arms in the same plane as the split then the split can be moulded in the plug in a two part mould (apart from a core pin for the bore) without the necessity of a further special insert. Indeed, the split can in this way be non-linear, and different on one side of the plug from the other.

Preferably, said arms each comprise a base connected along a hinge line to said body portion said hinge line being closer to said leg portions than said base and said base is lying substantially parallel the axis of said through-bore, and transverse ridges are formed on said base, which ridges extend beyond said base in both a radial and a circumferential direction with respect to said axis.

Preferably, the extensions of the ridges radially and circumferentially meet at corners of the ridges, which corners are sharp.

The advantage felt by ridges formed as opposed to the teeth hitherto known in such arms, is that, a better grip is achieved in the bore of the product. This is because the ridges extend around the base of the arm and so have a circumferential component, as well as a radial component. Where those components meet it is much preferred that they do so at a point, or at least along a sharp line or corner, so that the point or corner can more effectively bite into the material of the product in which the wall plug is fitted.

Apart from improving the overall security of the fixing provided by the wall plug according to the present invention, the tendency for the wall plug to rotate in the bore of the product as a screw is inserted is further reduced.

Indeed, ridges are preferably so-arranged that they have an axial dimension to counteract rotational forces on the plug.

Preferably said ridges are curved so that their centres between their edges are nearer said leg portion than their edges.

Preferably said ridges are chevron-shaped.

The fact that the ridges have an axial dimension means that, when the arms are pressed into engagement with the bore of the product in question, the axial dimension is contrary to imposed torque on the wall plug as a screw is screwed into it so that rotation of the plug in the bore of the product, which defeats further insertion of the screw, can be effectively prevented.

The invention is further described hereinafter, by way of example, with reference to the accompanying drawings, in which:-
Figure 1a is a perspective view of a wall plug according to the present invention;
Figures 1b and c are a side view of a plan view of the plug of Figure la, seen in the direction of the arrows b and c respectively in Figure 1a;
Figures 2a and b are end views of the plug of Figure 1a, seen in the direction of the arrows IIa and IIb respectively in Figure 1a;
Figure 3 is a section on the line III-III in Figure 1c;
Figure 4 is a side view of a core pin forming the bore of the plug of Figure 1;
Figure 5 is a perspective view of a plug similar to that of Figure 1 but without arms;
Figure 6 is a schematic illustration showing stages of use of the wall plug of Figure 1 in solid construction product; and
Figure 7 is as Figure 6 but in hollow construction product.

In the drawings a wall plug or anchor 10 comprises a moulded plastics component having a body portion 12 and a legs portion 14. The legs portion 14 forms a front end 16 of the plug, while the body portion forms a back end 18. The legs portion 14 is defined by a longitudinal slit 20 which terminates at a conjunction 22 between the body and leg portions.

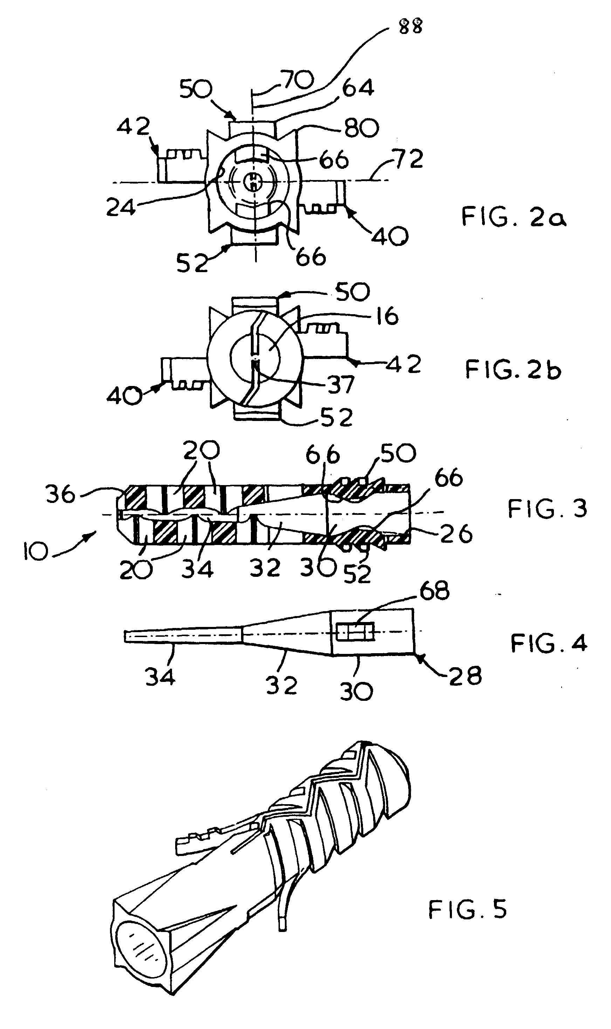

A longitudinal bore 24 extends almost the entire length of the plug 10 from an opening 26 at the back end 18 to the front end 16. The bore 24 is formed in a mould (not shown) by a core pin 28, the relevant part of which is shown in Figure 4. This has, and forms in the bore 24, a cylindrical body part 30, a sharply tapering conjunction part 32 and a barely tapering leg part 34.

The slit 20 communicates with the bore 24 from either side of the plug and is formed as a zig-zag with complementary zigs and zags on either side of the plug. The slit 20 on each side of the plug, and the bore 24 between, defines two legs 36,38 of the plug 10. The legs are entirely separate from one another apart from their mutual conjunction with the body portion 12 and a small, frangible tab 37 between them at the front end 16 of the plug.

Each leg 36,38 carries a wing 40,42 connected to each leg at a hinge line 44. Each wing arches outwardly from the plug and backwardly towards the body portion 12.

Each wing has teeth 46 on one edge but is flat on the other. Moreover, in the conjunction 22 region of plug 10, there is provided recesses 48 adapted to receive and locate the wings 40,42 as explained further below.

The body portion 12 has two arms 50,52 formed by U-shaped openings 54 in the body portion 12 and communicating with the bore 24.

Each arm 50,52 comprises a base 58 which connects to the plug at hinge line 56 and extends backwards away from the legs portion 14. The base has ridges 60 which are chevron-shaped, pointing forwards, and which extend from the base, not only radially, but also laterally, or rather circumferentially, into the opening 54. The ridges have chamfered front faces 62 which meet the circumferential parts of the ridges 60 at sharp corners 64.

Each arm 50,52 has a dimension 66 (see Figures 2a and 3)which extends into the bore 24 of the plug. The dimension 66 is shaped by an indentation 68 of the core pin 28 to have a concave curvature approximately centred on the long axis 100 the plug 10.

The plug 10 has a first plane 70 defined by the slit 20 and which corresponds with the section line III - III and the plane of view in Figure 3. Both arms 50,52 are disposed in the first plane 70. A second plane 72 contains the axis 100 and lies perpendicular the first plane 70. The wings 40,42 lie substantially in the second plane 72, the flat edges of the wings lying in said plane. The second plane also defines the break line between the two mould parts (not shown) which are used to make the plug 10.

The body portion 12 is completed by four fins 80.

The legs 36,38 are each provided with flutes 82 which are each approximately semi-circular extending around each leg from the slit 20 on one side to the slit on the other side.

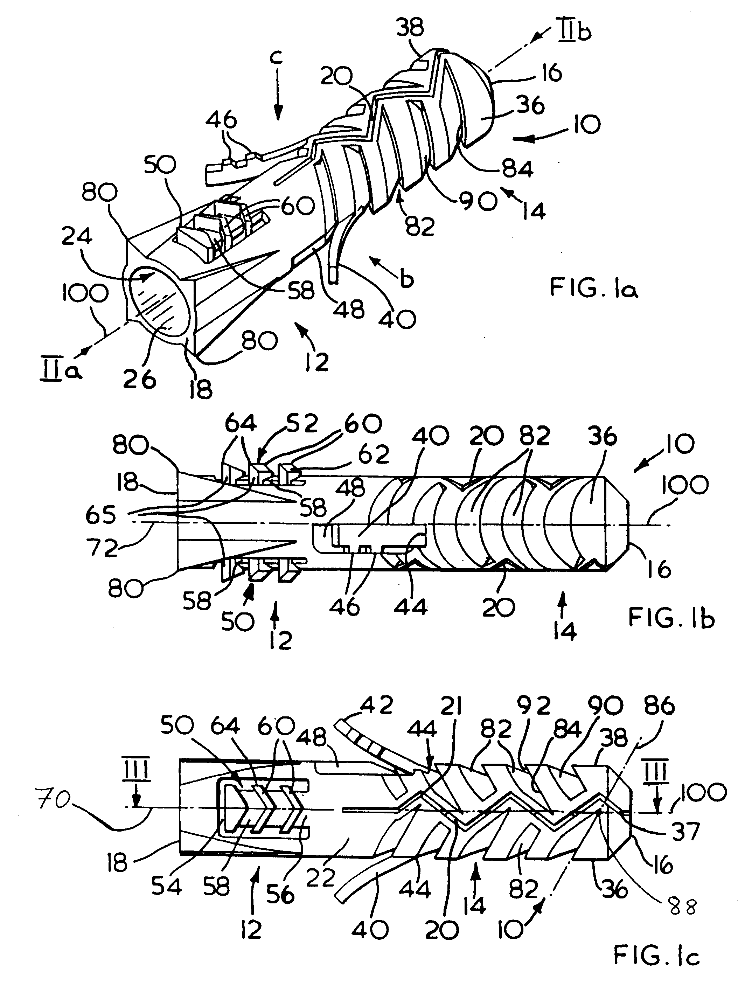

The flutes on each leg are inclined backwardly and comprise, in section, V-shaped notches. On leg 36, one side 84 of each notch lies in one of a series of parallel third planes (for example, plane 86 in Figure 1c) which planes are inclined with respect to the axis 100 of the plug 10. The first plane 70 and third plane 86 intersect along a line (indicated as point of intersection 88 of the planes 86 and 70 in Figure 1C or line 88 contained in the first plane 70 in Figure 2a) which is perpendicular to axis 100 and which is contained in the first plane 70. The notches on leg 38 correspond, but here the "third" plane 86 is inclined in the other direction with respect to the axis 100.

The other side 90 of the V-shaped notches forming flutes 82 are part conical and meet the sides 84 along an elliptical line 92, centred on the axis 100, at the base of each flute.

Thus although the flutes 82 are inclined and are undercut, at least in the second plane 72, they are capable of being formed in a two-part mould separating in the second plane 72 in the direction of line 88.

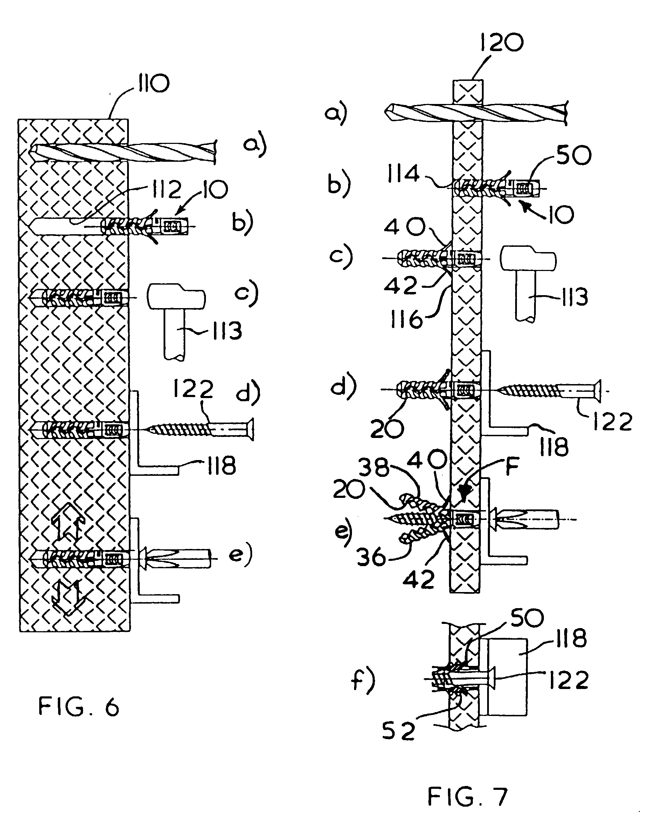

Figure 5 of the drawings shows a different embodiment of the plug 10 in which the arms 50,52 are not employed.

Figures 6 and 7 of the drawings show the mode of operation of the plug 10 in solid construction product 110 and hollow construction product 120 respectively. The following description applies to both modes unless otherwise stated.

The first step a) is to drill a hole in the product: a blind bore 112 in the solid material 110 and a through bore 114 in the hollow material 120. The hollow material 120 may be sheet material, as shown, although it may equally comprise a cavity in, for example, an aerated or hollow brick.

In step b), the plug 10 is inserted in the bore 112,114. The diameter of the bore 112,114 should be substantially the same as the diameter of the plug. In step c) of Fig. 6, the plug is fully inserted, possibly with the assistance of a hammer 113. In either case, the wings 40,42 are compressed against the plug body 10 and housed within the recesses 48 provided therefor. However, even when received in the recesses, the teeth 46 on each wing stand proud of the cylindrical surface of the plug in the conjunction region 22. These teeth thus bite into the material of the product and are pressed into engagement with the bore 112,114 by the resilience of the plastics material of the wings 40,42.

In the case of the hollow wall, when the plug is fully inserted, the wings open out again behind the hollow construction product 120 and rest against, or perhaps slightly away from, rear surface 116, depending on the thickness of the product 120.

Also during insertion at step c), the arms 50,52 are in both cases inwardly deflected, because they stand proud of the cylindrical surface of the body portion 12, in particular the corners 64 of the ridges 60. The chevron shape of the ridges 60 assists insertion by spreading and removing any loose material in the bores 112,114.

When the arms 50,52 are inwardly deflected, then the dimensions 66, already intruding into the bore 24, further enter this space and between them form a receptacle, by virtue of their concave surface, for a screw fastener.

While a screw is shown, any form of threaded fastener having a coarse thread, so long as it is appropriately dimensioned, will suffice, although even a nail will usually provide some form of fixing.

In step d) of Fig. 6, an article 118 to be secured to the product is offered up to the bore 112,114 and plug therein. A screw 122 is then inserted and immediately engages between the dimensions 66 of the arms 50,52. The diameter of the screw is arranged so that as it passes through the plug, the arms 50,52 are forced radially outwards. The curvature of the dimensions 66 both keep the screw central on the axis 100 and prevent, or at least subdue, any tendency of the arms to be deflected sideways.

At this time, the ridges 60 on the outside of the arms 50,52 bite further into the material of the product 110,120 (depending on the material of the product and, indeed, of the plug). In hard material this biting may not be very much, but in such material that is not so important because the dimensions of the plug, hole and screw would be selected such that, in combination, all three form a tight fit in the bore. Even if this were not the case, or where the material is relatively soft, then two features of the arms 50,52 mitigate against the natural tendency of the plug to rotate in the bore 112,114 as the screw 122 is turned in the plug 10.

The first feature is the corners 64 on the arms 50,52 provided by the fact that the ridges 60 extend around the base 58 of each arm. The corners 64 and sides 65, present a sharp point which is driven into the material of the product when the screw is inserted and which bite in further if the plug should start to turn.

The second feature is the fact that the ridges 60 are chevron-shaped providing an axial dimension which therefore must cut out more material as the plug rotates. Since the product would resist material being removed, the chevron ridges act as a brake against rotation.

There is, of course, a conventional anti-rotation element provided in the plug 10 by the fins 80 giving the plug a substantially square section at its end 18.

Referring only to the solid construction product 110 of Figure 6 for the moment, there are two further anti-rotation elements of the plug 10. First are the wings 40,42 acting here in a conventional manner and in which the teeth 46 are arranged to bite into the material in a tightening direction of the screw 122.

Secondly, the flutes 82 in the legs 36,38 are inclined as described above. Like the chevrons 60 these give the flutes an axial dimension braking any rotation in the same manner.

The fact that the split 20 is non-linear and that the "zigs" and "zags" alternate with one another on either side of the plug, ensures that the screw stays central and is not allowed to get deflected sideways where it would have to grip against the frangible material of the product and where a secure fixing could not be achieved.

However, the non-linear, zig-zag split has a further function in the hollow construction product application of Figure 7.

Because of the zig-zag split 20, the legs become splayed apart, when there is nothing to stop them doing so, much more than if there was a linear split. This is because the legs ride up, as it were, on the first "zig" 21 on one side of each leg. This presses the wings 40,42 into tight engagement with the rear surface 116 of the hollow product 120 and the result is a secure fixing. That is to say, the arms 50,52 are gripping the bore 114 so the plug is secure there. Secondly, the legs 36,38 are splayed wide apart behind the product 120 which itself adds security and makes difficult the withdrawal of the screw and plug as a unit; and, thirdly the wings 40,42 pressed against the back of the product 120 provides a further anchor against withdrawal.

Returning to the solid construction product 110, the plug 10 provides a very secure fixing against unitary pull-out for several reasons. The arms 50,52 act as they do in the hollow construction with the chevrons 60 now resisting pull out. Instead of the pointed chevrons and sloping front faces 62 facilitating insertion, the open rear gapes of the chevron 60 and the sharp edges at the top of the faces 62, not to mention the corners 64 digging into the material, all conspire to make withdrawal difficult without prior removal of the screw.

In blind bores, the wings do offer a certain amount of resistance to withdrawal but this is conventional. However, the inclined flutes 82 which provide undercut barbs in the surface of the plug, in the very region (i.e. plane 72) where most of the pressure exerted by the screw attempting to splay the legs 36,38 is felt, offers further and significant resistance to pull-out.

Finally, in order to balance the forces acting on the product by the wall plug once a screw is inserted and to spread the load in a more even radial direction, the arms 50,52 are arranged to lie on plane 70 perpendicular to the plane 72 on which lie the legs 36,38.

This also makes it possible to mould the plug in a two-part mould with only the core pin 28 required as well. The arms 50,52, wings 40,42 and split 20, not to mention the inclined flutes 82 and fins 80, are all formed by contours of the two-part mould which can be separated without any unusual movements or prior withdrawals of components. The plugs do need to be sprung off the core pins by virtue of the dimensions 66 filling the indentations 68 in the core pin. However, this is not difficult as the dimension 66 is gently sloped and the arms 50,52 can easily flex about hinge 56.

The end result of these various features is wall plug of enhanced performance but which nevertheless can be constructed in the least expensive method.

## Claims

1. A wall plug (10) comprising:-
a body portion (12) constructed as a substantially cylindrical body having an axial through-bore (24);
a legs portion (14) connected to said body portion (12) and comprising two legs (36,38) defined by a slit (20) substantially disposed about a first plane (70); and
flutes (82) formed around said leg portions which are inclined backwards towards said body portion (12) ;
wherein each flute (82) commences at or near said slit (20) on one side of the plug and extends backwardly around the plug until reaching a second plane (72) perpendicular said first plane (70); and then extends forwardly until reaching near said slit (20) on the other side of the plug;
characterised in that each flute (82) on each leg comprises a V-shaped notch, one side (84) of the notch (82) lying in a third plane (86) around the entire length of the notch, which third plane (86) is inclined with respect to the axis (100) of the plug and contains a line (88) which is both perpendicular to said axis (100) and contained in said first plane (70), the one side (84) of the notch being further from said body than the other side (90).

2. A wall plug as claimed in claim 1, in which said other side (90) of said notch is part conical, intersecting said one side (84) on an elliptical line in said third plane (86) and centred on the axis (100) of the plug.

3. A wall plug as claimed in either of the preceding claim further comprising two arms (50,52) formed in said body portion (12) by U-shaped openings (54) in said body portion, one on either side of said body portion.

4. A wall plug as claimed in claim 3, wherein said arms (50,52) being disposed on said first plane (70).

5. A wall plug as claimed in either claim 3 or claim 4, in which said arms (50,52) have a dimension (66) extending into the bore (24) of said plug which is greater along the sides of the arm than along a central axis of the arm.

6. A wall plug as claimed in any one of claims 3 to 5, wherein said arms (50,52) each comprise a base (58) connected along a hinge line (56) to said body portion, said hinge line (56) being closer to said leg portions (14) than said base (58) and said base (58) lying substantially parallel the axis (100) of said through-bore (24), transverse ridges (60) being formed on said base, which ridges (60) extend beyond said base (58) in both a radial and a circumferential direction with respect to said axis (100).

7. A wall plug as claimed in claim 6, in which the extensions of the ridges radially and circumferentially meet at corners (64) of the ridges, which corners are sharp.

8. A wall plug as claimed in any one of claims 3 to 5, wherein said arms (50,52) each comprise a base (58) connected along a hinge line (56) to said body portion, said hinge line (56) being closer to said leg portions (14) than said base (58) and said base (58) lying substantially parallel the axis (100) of said through bore (24), wherein transverse ridges (60) are formed on said base (58), which ridges (60) are so arranged that they have an axial dimension to counteract rotational forces on the plug.

9. A wall plug as claimed in claim 8, in which said ridges (60) are curved so that their centres between their edges are nearer said legs portion (14) than their edges.

10. A wall plug as claimed in claim 9, in which said ridges are chevron-shaped.

11. A wall plug as claimed in any one of the preceding claims, having two wings (40,42) formed on said leg portions and disposed on a plane (72) substantially perpendicular to said first plane (70).

12. A wall plug as claimed in claim 11, wherein each wing (40,42) is connected to a respective leg (36,38) along a hinge line (44) and each wing extending outwardly and backwardly towards said body portion (12), recesses (48) in said plug being provided to house said wings within the general confines of the plug when said wings (40,42) are bent towards the plug about said hinge line (44).

13. A wall plug as claimed in any one of the preceding claims, in which said slit (20) substantially disposed about the first plane (70) is not straight and that the slit on one side of the plug is substantially the image of the slit on the other side of the plug.

## Patentansprüche

1. Wand-Dübel (10), mit:
einem Körperbereich (12), der als ein im wesentlichen zylindrischer Körper mit einer axialen Durchgangsbohrung (24) ausgebildet ist;
einem Schenkelbereich (14), der mit dem Körperbereich (12) verbunden ist und zwei Schenkel (36, 38) aufweist, die durch einen Einschnitt (20) gebildet sind, der im wesentlichen um eine erste Ebene (70) herum angeordnet ist; und
um die Schenkelbereiche herum ausgebildeten Rillen (82), die nach hinten in Richtung auf den Körperbereich (12) geneigt sind;
wobei jede Rille (82) an oder nahe dem Einschnitt (20) an einer Seite des Dübels beginnt und sich nach hinten gerichtet um den Dübel erstreckt, bis zum Erreichen einer zweiten Ebene (72), die senkrecht zu der ersten Ebene (70) verläuft, und sich dann nach vorne gerichtet erstreckt, bis zum Erreichen der Nähe des Einschnitts (20) an der anderen Seite des Dübels;
**dadurch gekennzeichnet,** daß jede Rille (82) an jedem Schenkel eine V-förmige Einkerbungen aufweist, wobei eine Seite (84) der Einkerbung (82) um die gesamten Länge der Einkerbung in einer dritten Ebene (86) liegt, wobei die dritte Ebene (86) bezüglich der Achse (100) des Dübels geneigt ist und eine Linie (88) enthält, die sowohl zu der Achse (100) senkrecht ist als auch in der ersten Ebene (70) enthalten ist, wobei die eine Seite (84) der Einkerbung von dem Körper weiter entfernt ist als die andere Seite (90).

2. Wand-Dübel nach Anspruch 1, bei dem die andere Seite (90) der Einkerbung teilweise konisch ist, sich mit der einen Seite (84) in einer elliptischen Linie auf der dritten Ebene (86) schneidet und auf der Achse (100) des Dübels zentriert ist.

3. Wand-Dübel nach einem der vorhergehenden Ansprüche, außerdem mit zwei Armen (50, 52), die in dem Körperbereich (12) durch U-förmige Öffnungen (54) in dem Körperbereich gebildet sind, einer an jeder Seite des Körperbereichs.

4. Wand-Dübel nach Anspruch 3, bei dem die Arme (50, 52) auf der ersten Ebene (70) angeordnet sind.

5. Wand-Dübel nach Anspruch 3 oder Anspruch 4, bei dem die Arme (50, 52) eine sich in die Bohrung (24) des Dübels erstreckende Abmessung (66) haben, die entlang der Seiten von dem Arm größer ist als entlang einer Mittelachse von dem Arm.

6. Wand-Dübel nach einem der Ansprüche 3 bis 5, bei dem die Arme (50, 52) jeweils eine Basis (58) haben, die entlang einer Gelenklinie (56) mit dem Körperbereich verbunden ist, wobei sich die Gelenklinie (56) in größerer Nähe zu den Schenkelbereichen (14) befindet als die Basis (58), und die Basis (58) im wesentlichen parallel zu der Achse (100) der Durchgangsbohrung (24) liegt, wobei an der Basis schräg verlaufende Rippen (60) ausgebildet sind, wobei sich die Rippen (60) sowohl in Radial- als auch in Umfangsrichtung bezüglich der Achse (100) über die Basis (58) hinaus erstrecken.

7. Wand-Dübel nach Anspruch 6, bei dem sich die Erstreckungen der Rippen in Radial- und Umfangsrichtung an den Ecken (64) der Rippen treffen, wobei die Ecken scharf sind.

8. Wand-Dübel nach einem der Ansprüche 3 bis 5, bei dem die Arme (50, 52) jeweils eine Basis (58) haben, die entlang einer Gelenklinie (56) mit dem Körperbereich verbunden ist, wobei sich die Gelenklinie (56) in größerer Nähe zu den Schenkelbereichen (14) befindet als die Basis (58), und die Basis (58) im wesentlichen parallel zu der Achse (100) der Durchgangsbohrung (24) liegt, wobei an der Basis schräg verlaufende Rippen (60) ausgebildet sind, wobei die Rippen (60) so angeordnet sind, daß sie eine axiale Abmessung haben, um auf den Dübel wirkenden Rotationskräften entgegenzuwirken.

9. Wand-Dübel nach Anspruch 8, bei dem die Rippen (60) so gekrümmt sind, daß sich deren Mittelpunkte zwischen deren Kanten in größerer Nähe zu dem Schenkelbereich (14) befinden als deren Kanten.

10. Wand-Dübel nach Anspruch 9, bei dem die Rippen Chevronförmig sind.

11. Wand-Dübel nach einem der vorhergehenden Ansprüche, mit zwei Flügeln (40, 42), die an den Schenkelbereichen ausgebildet und auf einer Ebene (72) angeordnet sind, die im wesentlichen senkrecht zu der ersten Ebene (70) verläuft.

12. Wand-Dübel nach Anspruch 11, bei dem jeder Flügel (40, 42) entlang einer Gelenklinie (44) mit einem zugehörigen Schenkel (36, 38) verbunden ist und sich jeder Flügel nach außen und nach hinten in Richtung auf den Körperbereich (12) erstreckt, wobei in dem Dübel Aussparungen (48) vorgesehen sind, um die Flügel innerhalb der allgemeinen Umgrenzungen des Dübels aufzunehmen, wenn die Flügel (40, 42) entlang der Gelenklinie (44) in Richtung auf den Dübel gebogen sind.

13. Wand-Dübel nach einem der vorhergehenden Ansprüche, bei dem der Einschnitt (20), der im wesentlichen um die erste Ebene (70) herum angeordnet ist, nicht gerade ist und daß der Einschnitt an einer Seite des Dübels im wesentlichen dem Bild des Einschnitts an der anderen Seite des Dübels ist.

## Revendications

1. Cheville (10) comprenant:
une partie formant corps (12) construite sous la forme d'un corps sensiblement cylindrique ayant un alésage traversant axial (24);
une partie formant pattes (14) reliée à ladite partie formant corps (12) et comprenant deux pattes (36, 38), définies par une fente (20), disposées sensiblement autour d'un premier plan (70); et
des stries (82) formées autour desdites parties formant pattes, qui sont inclinées vers l'arrière vers ladite partie formant corps (12);
dans laquelle chaque strie (82) commence au niveau ou près de ladite fente (20) d'un côté de la cheville et s'étend vers l'arrière autour de la cheville jusqu'à atteindre un deuxième plan (72) perpendiculaire audit premier plan (70) ; et s'étend ensuite vers l'avant jusqu'à arriver près de ladite fente (20) de l'autre côté de la cheville;
caractérisée en ce que chaque strie (82) sur chaque patte comprend une encoche en forme de V, un côté (84) de l'encoche (82) s'étendant dans un troisième plan (86) sur environ toute la longueur de l'encoche, lequel troisième plan (86) est incliné par rapport à l'axe (100) de la cheville et comprend une ligne (88) qui est à la fois perpendiculaire audit axe (100) et comprise dans ledit premier plan (70), le premier côté (84) de l'encoche étant plus éloigné dudit corps que l'autre côté (90).

2. Cheville selon la revendication 1, dans laquelle ledit autre côté (90) de ladite encoche est en partie conique, il définit une intersection avec ledit premier côté (84) sur une ligne elliptique dans ledit troisième plan (86) et est centré sur l'axe (100) de la cheville.

3. Cheville selon l'une ou l'autre des précédentes revendications, comprenant en outre deux bras (50, 52) formés dans ladite partie formant corps (12) par des ouvertures en forme de U (54) dans ladite partie formant corps, à raison d'un bras de chaque côté de ladite partie formant corps.

4. Cheville selon la revendication 3, dans laquelle lesdits bras (50, 52) sont disposés sur ledit premier plan (70).

5. Cheville selon la revendication 3 ou la revendication 4, dans laquelle lesdits bras (50, 52) ont une dimension (66) s'étendant dans l'alésage (24) de ladite cheville qui est plus grande le long des côtés du bras que le long d'un axe central du bras.

6. Cheville selon l'une quelconque des revendications 3 à 5, dans laquelle lesdits bras (50, 52) comprennent chacun une base (58) reliée le long d'une ligne charnière (56) à ladite partie formant corps, ladite ligne charnière (56) étant plus proche desdites parties formant pattes (14) que ladite base (58), et ladite base (58) s'étendant sensiblement parallèlement à l'axe (100) dudit alésage traversant (24), des arêtes transversales (60) étant formées sur ladite base, lesquelles arêtes (60) s'étendent au-delà de ladite base (58) à la fois dans une direction radiale et dans une direction circonférentielle par rapport audit axe (100).

7. Cheville selon la revendication 6 , dans laquelle les extensions des arêtes se rejoignent radialement et circonférentiellement aux angles (64) des arêtes, lesquels angles sont vifs.

8. Cheville selon l'une quelconque des revendications 3 à 5, dans laquelle lesdits bras (50, 52) comprennent chacun une base (58) reliée le long d'une ligne charnière (56) à ladite partie formant corps, ladite ligne charnière (56) étant plus proche desdites parties formant pattes (14) que ladite base (58), et ladite base (58) s'étendant sensiblement parallèlement à l'axe (100) dudit alésage traversant (24) dans laquelle des arêtes transversales (60) sont formées sur ladite base (58), lesquelles arêtes (60) sont agencées de façon à avoir une dimension axiale pour s'opposer à des forces de rotation sur la cheville.

9. Cheville selon la revendication 8, dans laquelle lesdites arêtes (60) sont incurvées de façon que leur centre, entre leurs bords, soit plus proche de ladite partie formant pattes (14) que leurs bords.

10. Cheville selon la revendication 9, dans laquelle lesdites arêtes sont en forme de chevrons.

11. Cheville selon l'une quelconque des précédentes revendications, ayant deux ailes (40, 42) formées sur lesdites parties formant pattes et disposées sur un plan (72) sensiblement perpendiculaire audit premier plan (70).

12. Cheville selon la revendication 11, dans laquelle chaque aile (40, 42) est reliée à une patte respective (36, 38) le long d'une ligne charnière (44), chaque aile s'étendant vers l'extérieur et vers l'arrière, vers ladite partie formant corps (12), des évidements (48) étant ménagés dans ladite cheville pour recevoir lesdites ailes à l'intérieur des contours généraux de la cheville quand lesdites ailes (40, 42) sont pliées vers la cheville autour de ladite ligne charnière (44).

13. Cheville selon l'une quelconque des précédentes revendications, dans laquelle ladite fente (20) disposée sensiblement autour du premier plan (70) n'est pas droite et dans laquelle la fente d'un côté de la cheville est sensiblement le reflet de la fente de l'autre côté de la cheville.
